# EUROPEAN PATENT SPECIFICATION

(11) **EP 1 429 595 B1**
(45) Date of publication and mention of the grant of the patent: **13.01.2010**
(21) Application number: 02762560.7
(22) Date of filing: 19.09.2002
(51) Int. Cl.: A01D 17/06

(54) **APPARATUS FOR BREAKING UP CLODS AND REMOVING UNWANTED OBJECTS FROM SOIL**
VORRICHTUNG ZUM ZERKLEINEN VON ERDSCHOLLEN SOWIE ZUM ENTFERNEN UNERWÜNSCHTER GEGENSTÄNDE VOM BODEN
APPAREIL PERMETTANT DE BRISER DES MOTTES ET D'EXTRAIRE DU SOL DES OBJETS INDESIRABLES

(30) Priority: 19.09.2001 GB 0122604
(43) Date of publication of application: 23.06.2004
(73) Proprietor: RICHARD PEARSON LIMITED, Boston, Lincolnshire PE22 0JZ (GB)
(72) Inventor: COULAM, John, Patrick, Richard Pearson Limited, Lincolnshire PE22 0JZ (GB); BOSWORTH, Phillip, Richard Pearson Limited, Lincolnshire PE22 0JZ (GB)
(74) Representative: Lamb, Richard Andrew
(86) International application number: PCT/GB2002/004279
(87) International publication number: WO 2003/024195

(56) References cited:
- EP-A- 1 078 565
- WO-A-96/24240
- WO-A-97/38568
- DE-A- 10 065 403
- DE-U- 29 803 880
- GB-A- 761 984
- GB-A- 2 239 156
- US-A- 5 069 292

## Description

The present invention relates to apparatus for breaking up clods and removing unwanted objects, such as stones, from soil.

Clods or large stones in the soil have always caused a problem when preparing a suitable bed for sowing or planting. Furthermore, when harvesting root vegetables or bulbs, any stones or clods remaining in the soil have to be separated from the harvested crop.

Various devices are known for lifting soil clods and stones from the ground, passing the lifted material up a lifting conveyor and providing agitating motion to separate stones from the soil and to break up the clods into soil, which, together with small stones, then falls through the conveyor back to the ground. Traditionally, web conveyors were used, comprising closely spaced parallel bars. It was also known to suspend a "scrubber" web - above the main lifting conveyor. The scrubber web comprised a plurality of transverse bars attached at both ends to spaced longitudinal belts or chains so as to form an axially extending static mat above the lifting conveyor. The weight of the scrubber web tended to break up clods carried up the lifting conveyor.

More recently, the trend has been to move away from web conveyors, because of their excessive length, and use conveyors formed from "starshafts". These are spaced, rotatable transverse shafts each having a plurality of axially-spaced "starwheels". Each starwheel has a plurality of angularly-spaced flexible fingers frequently, but not necessarily, having a convex leading edge and a concave trailing edge. The starwheels are usually formed from polyurethane or rubber. As clods are carried up such a starshaft conveyor, they are thrown around by the starwheels and gradually broken up into soil, which then falls down between the starwheels to the ground.

An advantage of using starshafts to break up clod and separate stones from the soil is that a significantly shorter conveyor is required than when using a web conveyor. This not only reduces the expense of the apparatus, but also provides a shorter turning circle when the apparatus is drawn behind a tractor. Thus, a greater area within a field can be cultivated.

EP 0 410 808B discloses an agricultural separator having a lifting conveyor comprising starshafts in which clods are broken up and soil and stones are separated as they are carried over the starwheels.

EP 1 078 565 discloses an agricultural sepavator having a lifting conveyor and a further conveyor for separating tubers from haulm.

Despite the increased break up of clods using starshaft conveyors rather than web conveyors, the break up of all clods is rarely completed, and a substantial number of clods pass over the top of the conveyor, to be collected in a bin, or to fall onto a cross conveyor so as to be deposited in a line along the field on either side of the sowing or planting row. These clods are subsequently ploughed back into the field, and have to be separated out again in the next planting or sowing season.

An object of the present invention is to provide apparatus for breaking up clods and separating unwanted objects from soil and having a substantially improved clod breaking-up capacity.

The invention provides apparatus for breaking up clods and separating unwanted objects from soil as claimed in Claim 1.

Preferably, the further conveyor is tiltable upwardly to an angle of 10° to 45° to the horizontal, and preferably also downwardly in order to convey any remaining unbroken clod, large stones or other unwanted objects, e.g. to a bin or to a cross conveyor.

Preferably, means are provided for controlling the speed of the main conveyor and the further conveyor separately, so that the further conveyor may be operated at a different speed (higher or lower) from that of the main conveyor.

Although either or both conveyors could be in the form of traditional web conveyors, they are preferably formed of starshafts, i.e. of rotatable members carrying spaced starwheels.

An embodiment of the invention will now be described with reference to the accompanying drawing, wherein:
Fig. 1 shows in diagrammatic side view apparatus for breaking up clods and separating unwanted objects from soil,
Fig. 2 shows in diagrammatic side view an alternative embodiment of the apparatus of Fig. 1, and
Fig. 3 shows diagrammatically in side view a further embodiment of the apparatus of Fig. 1.

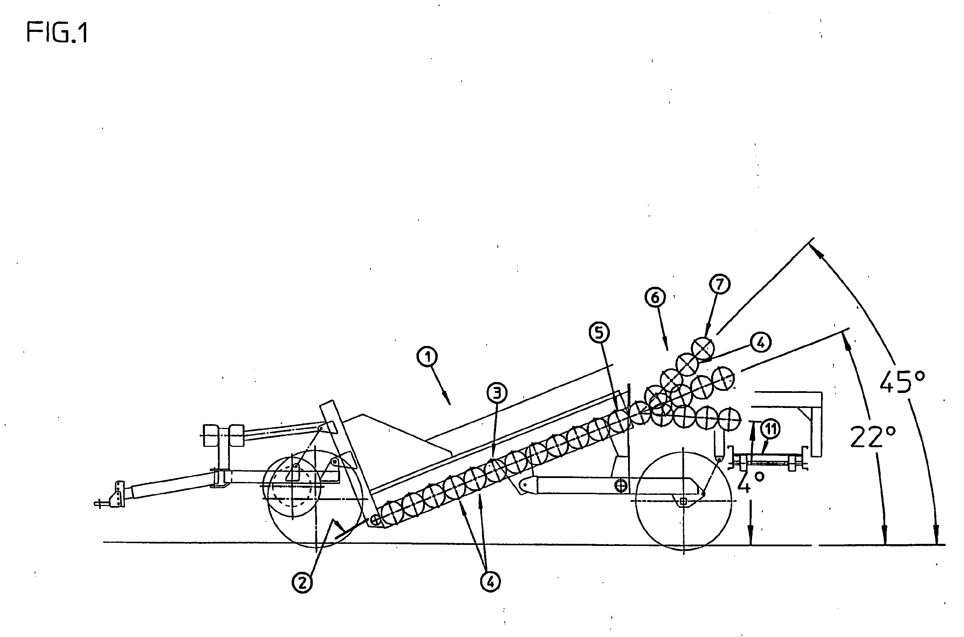

In Fig. 1 apparatus for breaking up clods and separating unwanted objects from the soil is in the form of a trailer 1 connectable by power take-off linkage to a tractor (not shown). The trailer 1 is provided with a share 2 for lifting the soil, clod and any other material from the ground and a downstream, upwardly inclined main lifting conveyor 3 comprising a plurality (here twelve) of starshafts 4. Each starshaft 4 comprises a polygonal-section (e.g. square, hexagonal etc.) shaft carrying a plurality of axially spaced starwheels, e.g. as shown in EP 0 410 808B. Conventionally, the starwheels of any one starshaft 4 are aligned with the spaces between the starwheels of the adjacent starshafts 4. The starwheels have a suitable number (e.g. 12, 18 etc.) of angularly spaced fingers, which may extend radially, or have a convex leading edge and a concave trailing edge in the tanner of a "parrot beak". Such starshafts and starwheels are conventional, and need not be described in further detail here.

At the uphill end 5 of the main conveyor 3, there is a further, shorter conveyor 6 of similar construction to the main conveyor 3, i.e. having starshafts 4' carrying spaced starwheels, but in the embodiment shown the further conveyor 6 has only four starshafts 4'.

As can be seen from the drawing, the further conveyor 6 is tiltable relative to the main conveyor 3 in an upwards direction to an angle of between 10° to 45°. During operation of the apparatus, soil and clod lifted by the share 2 passes up the main conveyor 3 and is broken up by the action of the rotating starwheels of the starshafts 4 so that soil falls down between the starwheels to the ground. Unbroken clods pass over the uphill end 5 of the main conveyor 3 onto the further conveyor 6. Because of the increased inclination of the further conveyor 6 clods are tumbled against each other and against further clods being conveyed up the main conveyor 3. The inclination of the further conveyor 6 is too steep for clods to be carried up over the uphill end 7. This constant tumbling action of the clods against each other results in rapid break up of the clods into soil, which then falls between the starwheels of the further conveyor 6 to the ground.

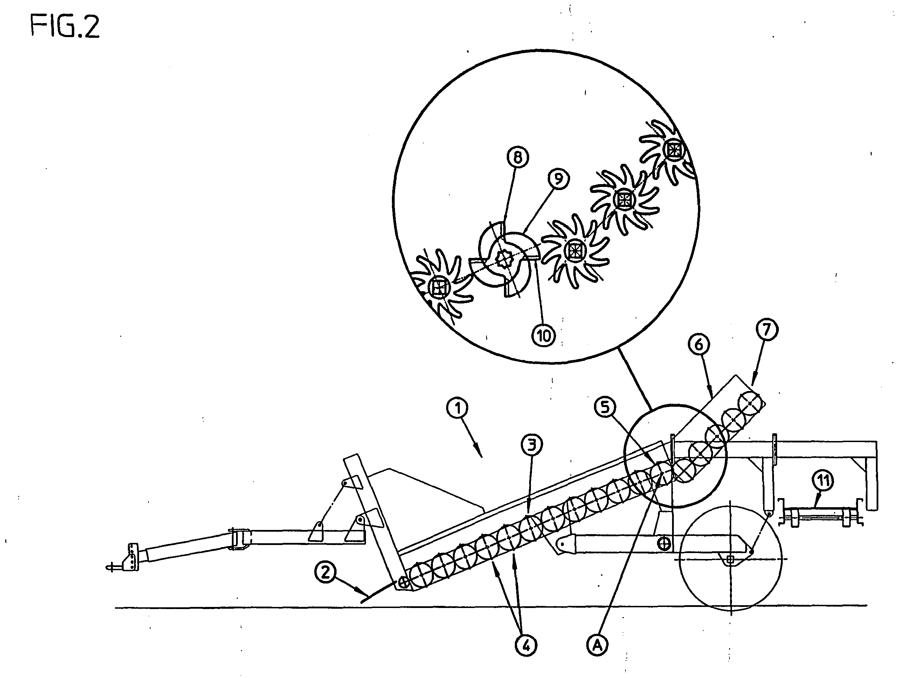

In an alternative embodiment of the invention (see Fig. 2), the further conveyor 6 is arranged below a longitudinal centre axis A of the starshaft 4 on the main conveyor 3 in closest proximity to the further conveyor 6, i.e. a longitudinal plane of the further conveyor 6 is offset from a longitudinal plane of the main conveyor. This arrangement effectively introduces a trough between the main conveyor 3 and the further conveyor 6, in that the soil, clods and other material passing along the main conveyor 3 drop downwards onto the further conveyor 6. When the further conveyor 6 is tilted upwards, as described above, falling of the soil, clods and other material onto the main conveyor 3 is prevented, since any material which falls backwards along the further conveyor 6 tends to be held in the effective trough between the main conveyor 3 and the further conveyor 6.

Prevention of the return of the soil, clods or other material to the main conveyor 3 increases the volume of clod which is subjected to the tumbling action of the further conveyor 6. In addition, clods at the lowermost point of the further conveyor 6 are forced against the starwheels on the starshaft 4 of the main conveyor 3 in closest proximity to the further conveyor 6, thus improving the breaking up of the clods.

In a further alternative embodiment at least some of the starwheels on at least one of the starshafts 4 of the main conveyor 3 are replaced by cutting or sizing discs 8 (see enlarged view of a portion of Fig. 2). Such discs 8 can be made of a hardened plastics material or of metal, e.g. steel. It will be appreciated that the discs 8 can also be made of any other suitable material. The discs 8 serve to cut through the clods to improve breaking up of the clods into smaller particles of a desired size. It would also be possible to include cutting or sizing discs 8 on at least one of the starshafts 4' of the further conveyor 6. At least part of the outer edges 9 of the cutting discs can be sharpened or provided with a blade 10 in order to improve the cutting of the clods.

The cutting discs 8 are spaced from adjacent starwheels, so as to provide a gap for the smaller particles produced from the cutting of the clods to fall through.

Although it would be possible to replace all of the starwheels with cutting or sizing discs 8, it is more desirable to retain a combination of starwheels and cutting discs in order to reduce the overall wear of the system. The cutting discs 8 are considerably less wear-resistant than the starwheels.

Separate drive means (not shown), for the starshafts 4 of the main conveyor 3 and for the starshafts 4' of the further conveyor 6 are provided, so that the starshafts of each conveyor can be driven at different speeds. For maximum break up of the clods, the rotational speed of the starshafts 4' of the further conveyor 6 may be less than the rotational speed of the starshafts 4 of the main conveyor 3. The relative speed required will depend on the particular soil conditions, and can be determined experimentally by the operator of the apparatus, e.g. the farmer. Similarly, the most suitable angle of inclination of the further conveyor 6 for the particular soil conditions can also be determined experimentally.

Although, in theory, the angle of inclination of the further conveyor 6 could be greater than 45°, in practice this is probably the maximum inclination that would be required.

It has been shown experimentally that the tumbling action provided by the more steeply inclined further conveyor 6 provides a virtual break up of all the clods. However, there may still be a few clods that refuse to be broken up, or large stones or boulders may have been extracted from the ground. In order to remove these, the further conveyor 6 is preferably pivotable downwards, e.g. to an angle of about 4° below the horizontal, so that any unbroken clods, large stones or boulders are conveyed over the end 7 of the further conveyor 6. This material can be removed on a cross conveyor 11, or collected in a bin (not shown) which may be detachable or tiltable to release the contents.

Although the angle of inclination of the main conveyor 3 has been shown in the drawing as 22°, this angle may also be adjustable (e.g. between 20° and 26°) depending on the prevailing soil conditions.

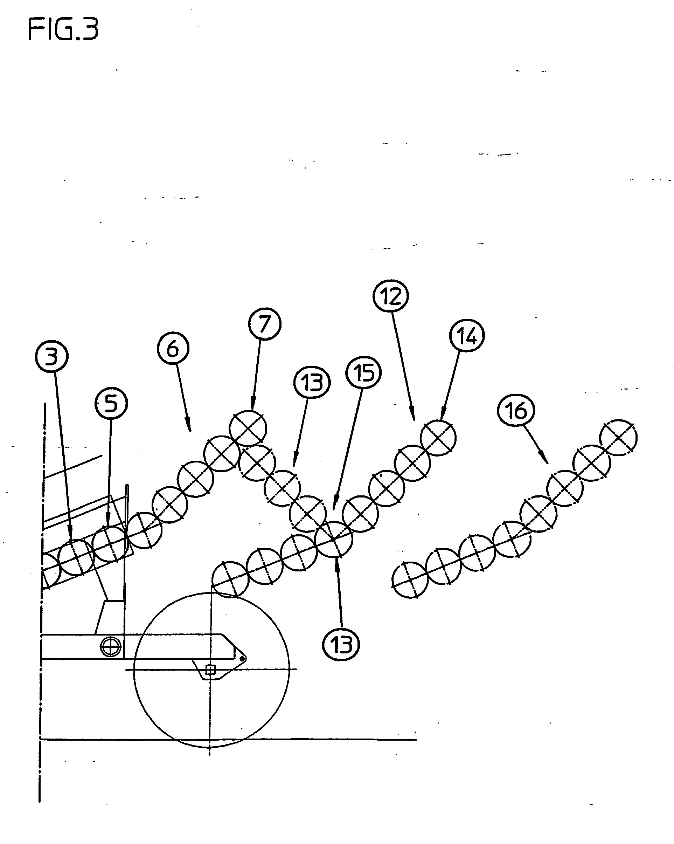

In Fig. 3 the apparatus of Fig. 1 is provided with a conveyor section 12 downstream of the tiltable conveyor 6. The conveyor section 12 comprises a further main conveyor 13 for receiving unbroken clod from the tiltable conveyor 6, and a further tiltable conveyor 14.

Although the main conveyor 3 is upwardly inclined at about 22° in order to lift material raised by the share 2, the further main conveyor 13 may be inclined at a lesser angle, e.g. about 10°, or could even be horizontal or downwardly inclined. The further main conveyor 13 could be horizontal or even downwardly inclined (as shown by 13' pin broken line in Fig. 3) to provide aggressive tumbling and break of clods in the "trough" 15 formed between the conveyors 13 and 14.

The further main conveyor 13 and the further tiltable conveyor 14 may be of similar construction to the main conveyor 3 and the tiltable conveyor 6, but typically the further main conveyor 13 would be shorter than the main conveyor 3, e.g. two, three or four starshafts, i.e. rows of starwheels, since it is not necessary to provide much lift to the clods before they reach the further tiltable conveyor 14. Similarly, the angle of inclination to the horizontal of the further tiltable conveyor 14 may be the same, greater than or less than the angle of inclination of the further tiltable conveyor 6. As discussed above, cutting or sizing discs 8 could replace some of the starwheels on the conveyors 12 and 13.

The speeds of operation of the further main conveyor 13 and the further tiltable conveyor 14 may be the same, greater than or less than the speeds of the main conveyor 3 and the tiltable conveyor 6.

The provision of the further conveyor section 12 should ensure that any unbroken clods falling onto the further main conveyor 13 from the tiltable conveyor 6. are broken up. The provision of the further conveyor section 12 may also enable the main conveyors 3 to be shorter, e.g. of far less than twelve starshafts.

In order to provide aggressive break up of particularly hard clods, the further main conveyor 13 may be inclined downwardly to the horizontal (as shown by broken line 10') so as to form a trough 15 between the conveyors 13 and 14. The effect of the trough 15 has been described in relation to Fig. 1 above.

Depending on soil conditions and the size and hardness of the clods lifted, it would be possible to provide still further downstream conveyor sections (a further conveyor section 16 is shown in broken line in Fig. 3), in effect a cascade of sections for breaking up the clods.

Various modifications may be made to the above-described embodiments. For example, the starwheels may have one or more elongated fingers, e.g. as disclosed in GB 2 268 867B. The starshafts may be as shown in PCT/GB 00/0300 (WO 01/15821 - A1) in which at least one finger of each starwheel is extended, and the starwheels are arranged sequentially on the shaft to form at least two oppositely directed helical ribs, so as to move material sideways from the centre of each starshaft to opposite ends thereof. This provides an additional sideways movement of the clods as they rise up the main conveyor 3 to facilitate breaking up of the clods.

Furthermore, resilient rings may be provided between adjacent starwheels on each starshaft as disclosed in EP 0 899 997. Alternatively, rigid rings may be provided between the starwheels as disclosed in EP 1 011 305.

In addition, the starshafts may be replaced by a plurality of parallel driven shafts each carrying a plurality of rotary members, such as rollers, axially spaced from one another along each shaft.

Clearly, known cultivators and separators may be converted or modified into apparatus for breaking up clods according to the invention by adding a further tiltable conveyor to the uphill end of the main conveyor of the cultivator or separator, as well as a further conveyor section or sections, if necessary.

## Claims

1. An apparatus for breaking up clods and separating unwanted material from soil comprising: means (2) for lifting soil and clods from the ground; a main inclined conveyor (3) for receiving soil and clods from the lifting means (2), conveying the soil and clods upwardly therealong and hallowing soil to fall therethrough back to the ground; and a further conveyor (6) provided at the uphill end of the main conveyor (3); **characterized in that** the further conveyor (6) is tiltable into a steeper upwards inclination than the main conveyor (3) to allow clods to tumble and break up.

2. An apparatus as claimed in Claim 1, wherein the further conveyors (6) tiltable upwardly to an angle of between substantially 10° to 45° to the horizontal.

3. An apparatus as claimed in Claim 1 or 2, wherein the further conveyor (6) it tiltable downwardly to convey unbroken clod and/or unwanted material.

4. An apparatus as claimed in any one of the preceding claims, wherein means are provided for controlling the speed of the main conveyor (3) and the further conveyor (6) separately, so that the further conveyor (6) may be operated at a different speed from that of the main conveyor (3).

5. An apparatus as claimed in any one of the preceding claims, wherein the main conveyor (3) and/or the further conveyor (6) is a web conveyor.

6. An apparatus as claimed in any one of Claims 1 to 6, wherein the main conveyor (3) and/or the further conveyor (6) comprises a plurality of driven parallel shafts (4) (4').

7. An apparatus as claimed in claim 6, wherein each shaft of the plurality of driven shafts (4) (4') includes a plurality of rotary members axially spaced from one another along the shaft (4) (4').

8. An apparatus as claimed in Claim 6, wherein the shafts (4) (4') carry resilient starwheels.

9. An apparatus as claimed in Claim 8, wherein the starwheels are formed of polyurethane.

10. An apparatus as claimed in Claim 8 or 9, wherein the starwheels have fingers with a convex leading surface and a concave trailing surface.

11. An apparatus as claimed in Claim 8 or 9, wherein the starwheels have substantially straight fingers.

12. An apparatus as claimed in Claim 8, 9, 10, or 11, wherein at least some of the starwheels are substitutable by cutting discs (8).

13. An apparatus as claimed in Claim 12, wherein the cutting discs (8) are made off plastics or metal.

14. An apparatus as claimed in any one of the preceding Claims, wherein a longitudinal plane of the further conveyor (6) is offset from a longitudinal plane of the main conveyor (3).

15. An apparatus as claimed in Claim 3, wherein a bin is arranged below the downstream end of the further conveyor (6) for collecting unbroken clods and/or unwanted material.

16. An apparatus as claimed in Claim 3, wherein a cross conveyor (11) is arranged below the downstream end of the further conveyor (6) for carrying away unbroken clods and/or unwanted material.

17. An apparatus as claimed in any of Claims 1 to 9, wherein a further conveyor section (12) is arranged downstream of the tiltable conveyor (6) to deceive unbroken clods therefrom, the further tillable conveyor section (12) comprising a further main conveyor (13) and a further tiltable conveyor (14) provided at the downstream end thereof and being tiltable relative to the said further main conveyor (13) to allow clods to tumble and break up.

## Patentansprüche

1. Vorrichtung zum Zerkleinern von Erdschollen und zum Entfernen unerwünschter Gegenstände aus dem Erdreich, enthaltend: eine Einrichtung (2) zum Anheben von Erdreich und Erdschollen vom Boden; eine geneigte Hauptfördereinrichtung (3), die Erdreich und Erdschollen von der Anhebeeinrichtung (2) empfängt und das Erdreich sowie die Erdschollen nach oben befördert und es dem Erdreich gestattet, zurück auf den Boden hindurchzufallen; und eine Zusatzfördereinrichtung (6), die am oberen Ende der Hauptfördereinrichtung (3) angebracht ist, **dadurch gekennzeichnet, dass** die Zusatzfördereinrichtung (6) in eine steilere Aufwärtsneigung geneigt werden kann als die der Hauptfördereinrichtung (3), damit Erdschollen umgewälzt und zerkleinert werden können.

2. Vorrichtung nach Anspruch 1, bei der die Zusatzfördereinrichtung (6) in einen Winkel nach oben geneigt werden kann, der im wesentlichen 10° bis 45° zur Horizontalen beträgt.

3. Vorrichtung nach Anspruch 1 oder 2, bei der die Zusatzfördereinrichtung (6) nach unten geneigt werden kann, um nicht zerkleinerte Erdschollen und/oder unerwünschte Gegenstände zu befördern.

4. Vorrichtung nach einem der vorhergehenden Ansprüche, bei der Einrichtungen vorgesehen sind, die die Geschwindigkeit der Hauptfördereinrichtung (3) und der Zusatzfördereinrichtung (6) derart getrennt steuern, dass die Zusatzfördereinrichtung (6) mit einer anderen Geschwindigkeit betrieben werden kann als die der Hauptfördereinrichtung (3).

5. Vorrichtung nach einem der vorhergehenden Ansprüche, bei der die Hauptfördereinrichtung (3) und/oder die Zusatzfördereinrichtung (6) ein Förderband sind.

6. Vorrichtung nach einem der Ansprüche 1 bis 6, bei der die Hauptfördereinrichtung (3) und/oder die Zusatzfördereinrichtung (6) eine Vielzahl angetriebener paralleler Wellen (4, 4') enthalten.

7. Vorrichtung nach Anspruch 6, bei der jede Welle aus der Vielzahl der angetriebenen Wellen (4, 4') eine Vielzahl von Drehelementen enthält, die entlang der Welle (4, 4') axial voneinander beabstandet sind.

8. Vorrichtung nach Anspruch 6, bei der die Wellen (4; 4') federnde Sternräder tragen.

9. Vorrichtung nach Anspruch 8, bei der die Sternräder aus Polyurethan bestehen.

10. Vorrichtung nach Anspruch 8 oder 9, bei der die Sternräder Finger mit einer konvexen Vorderkante und einer konkaven Hinterkante aufweisen.

11. Vorrichtung nach Anspruch 8 oder 9, bei der die Sternräder im wesentlichen gerade Finger haben.

12. Vorrichtung nach Anspruch 8, 9, 10 oder 11, bei der wenigstens einige der Sternräder durch Schneidscheiben (8) ersetzt werden könnten.

13. Vorrichtung nach Anspruch 12, bei der die Schneidscheiben (8) aus Kunststoff oder Metall bestehen.

14. Vorrichtung nach einem der vorhergehenden Ansprüche, bei der eine Längsebene der Zusatzfördereinrichtung (6) zu einer Längsebene der Hauptfördereinrichtung (3) versetzt ist.

15. Vorrichtung nach Anspruch 3, bei der ein Behälter unter dem stromabwärtigen Ende der Zusatzfördereinrichtung (6) angebracht ist, um nicht zerkleinerte Erdschollen und/oder unerwünschte Gegenstände aufzunehmen.

16. Vorrichtung nach Anspruch 3, bei der eine Querfördereinrichtung (11) unter dem stromabwärtigen Ende der Zusatzfördereinrjchtung (6) angeordnet ist, um nicht zerkleinerte Erdschollen und/oder unerwünschte Gegenstände abzuführen.

17. Vorrichtung nach einem der Ansprüche 1 bis 9, bei der ein Zusatzförderabschnitt (12) stromabwärts der neigbaren Fördereinrichtung (6) angeordnet ist, um von dieser nicht zerkleinerte Erdschollen aufzunehmen, wobei der Zusatzförderabschnitt (12) eine zusätzliche Hauptfördereinrichtung (13) und eine zusätzliche neigbare Fördereinrichtung (14) enthält, die am stromabwärtigen Ende derselben vorgesehen ist und relativ zur zusätzlichen Hauptfördereinrichtung (6) geneigt werden kann, damit Erdschollen umgewälzt und zerkleinert werden können.

## Revendications

1. Appareil pour briser des mottes de terre et séparer des matières indésirables de la terre, comprenant : des moyens (2) pour soulever la terre et les mottes de terre du sol ; un convoyeur incliné principal (3) pour recevoir la terre et les mottes de terre des moyens de levage (2) transportant la terre et les mottes de terre vers le haut le long de celui-ci et permettant à la terre de retomber sur le sol ; et un convoyeur supplémentaire (6) prévu au niveau de l'extrémité en amont du convoyeur principal (3) ; **caractérisé en ce que** convoyeur supplémentaire(6) peut s'incliner dans une direction ascendante plus raide que le convoyeur principal (3) pour permettre de faire tomber et de briser les mottes de terre.

2. Appareil selon la revendication 1, dans lequel le convoyeur supplémentaire (6) peut s'incliner vers le haut selon un angle compris entre sensiblement 10° et 45° par rapport à l'horizontale.

3. Appareil selon la revendication 1 ou 2, dans lequel le convoyeur supplémentaire (6) peut s'incliner vers le bas pour transporter des mottes de terre non brisées et/ou les matières indésirées.

4. Appareil selon l'une quelconque des revendications précédentes, dans lequel des moyens pour contrôler la vitesse du convoyeur principal (3) et du convoyeur supplémentaire (6) séparément sont prévus, de sorte que le convoyeur supplémentaire (6) peut être actionné à une vitesse différente de celle du convoyeur principal (3).

5. Appareil selon l'une quelconque des revendications précédentes, dans lequel le convoyeur principal (3) et/ou le convoyeur supplémentaire (6) est un convoyeur à bande.

6. Appareil selon l'une quelconque des revendications 1 à 6, dans lequel le convoyeur principal (3) et/ou le convoyeur supplémentaire (6) comprennent une pluralité d'arbres parallèles entraînés (4), (4').

7. Appareil selon la revendication 6, dans lequel chaque arbre de la pluralité d'arbres entraînés (4), (4') comprend une pluralité d'éléments rotatifs espacés de manière axiale les uns par rapport aux autres le long de l'arbre (4), (4').

8. Appareil selon la revendication 6, dans lequel les arbres (4), (4') supportent des roues en étoile élastiques.

9. Appareil selon la revendication 8, dans lequel les roues en étoile sont formés à partir de polyuréthane.

10. Appareil selon la revendication 8 ou 9, dans lequel les roues en étoile ont des doigts avec une surface d'attaque convexe et une surface de fuite concave.

11. Appareil selon la revendication 8 ou 9, dans lequel les roues en étoile ont des doigts sensiblement droits.

12. Appareil selon la revendication 8, 9, 10 ou 11 dans lequel au moins certaines des roues en étoile peuvent être remplacées par des disques de coupe (8).

13. Appareil selon la revendication 12, dans lequel les disques de coupe (8) sont réalisés à partir de matières plastiques ou de métal.

14. Appareil selon l'une quelconque des revendications précédentes, dans lequel un plan longitudinal du convoyeur supplémentaire (6) est décalé par rapport à un plan longitudinal du convoyeur principal (3).

15. Appareil selon la revendication 3, dans lequel une benne est agencée au-dessous de l'extrémité en aval du convoyeur supplémentaire (6) pour collecter les mottes de terre non brisées et/ou la matière indésirée.

16. Appareil selon la revendication 3, dans lequel un convoyeur transversal (11) est agencé au-dessous de l'extrémité en aval du convoyeur supplémentaire (6) pour éloigner les mottes de terre non brisées et/ou la matière indésirée.

17. Appareil selon l'une quelconque des revendications 1 à 9, comprenant une section de convoyeur supplémentaire (12) agencée en aval du convoyeur inclinable (6) pour recevoir les mottes de terre non brisées de celui-ci, la section de convoyeur inclinable supplémentaire (12) comprenant un autre convoyeur principal (13) et un autre convoyeur inclinable (14) prévus au niveau de son extrémité en aval et pouvant s'incliner par rapport audit convoyeur principal supplémentaire (13) pour permettre de faire tomber et de briser les mottes de terre.
